# EUROPÄISCHE PATENTSCHRIFT

(11) **EP 0 357 729 B1**
(45) Veröffentlichungstag und Bekanntmachung des Hinweises auf die Patenterteilung: **07.12.1994**
(21) Anmeldenummer: 89902758.5
(22) Anmeldetag: 13.02.1989
(51) Int. Cl.: G06K 7/00, G06K 13/08, G06K 7/14, G06K 7/08

(54) **LESEGERÄT FÜR NICHTSTATIONÄRE DATENSPEICHER**
EQUIPMENT FOR READING A NON-STATIONARY MEMORY
LECTEUR POUR MEMOIRE NON FIXE

(30) Priorität: 12.02.1988 DE 3804340
(43) Veröffentlichungstag der Anmeldung: 14.03.1990
(73) Patentinhaber: MARESCH, Klaus, D-81249 München (DE); MARESCH,Michael, D-80799 München (DE)
(72) Erfinder: MARESCH, Klaus, D-81249 München (DE); MARESCH,Michael, D-80799 München (DE)
(74) Vertreter: Jaeger, Klaus, Dr.
(86) Internationale Anmeldenummer: EP8900131
(87) Internationale Veröffentlichungsnummer: WO8907802

(56) Entgegenhaltungen:
- EP-A- 0 083 742
- FR-A- 2 599 530
- GB-A- 2 080 004
- US-A- 3 906 448
- US-A- 4 260 880
- US-A- 4 514 623

## Beschreibung

Die Erfindung betrifft ein Gerät zum Lesen von Daten aus einem prinzipiell beliebigen nichtstationären Datenspeicher, gemäß dem Oberbegriff von Anspruch 1. Dabei ist der Terminus eines "nichtstationären Datenspeichers" im Rahmen der vorliegenden Erfindung im weitesten Verständnis zu interpretieren. So kann ein nichtstationärer Datenspeicher im Sinne der vorliegenden Erfindung beispielsweise ein Blatt Papier, eine Kunststoffolie, ein Blech oder ein prinzipiell beliebiges anderes Flächenmaterial, vorzugsweise steifes Flächenmaterial sein, das eine optisch, elektrisch, magnetisch, kapazitiv oder in ebenfalls prinzipiell beliebiger anderer Weise abtastabare oder in anderer Weise auslesbare Information in Form von lesbaren Zeichen, Oberflächenvertiefungen, Durchbrüchen, speziellen Reflexionsbereichen oder anderen Markierungen trägt. Der nichtstationäre Datenspeicher kann desweiteren beispielsweise ein magnetischer, optischer, magnetooptischer oder elektrooptischer Speicherchip sein, der in oder an einem bequem handhabbaren Träger als inteorierter Bestandteil angebracht ist und entweder berührungsfrei oder galvanisch lesbar ist. Überdies braucht der nichtstationäre Datenspeicher auch durchaus nicht nur ein Flächenmaterial zu sein, sondern kann auch die Gestalt eines beliebigen anderen zweckensprechenden dreidimensionalen Körpers haben, so beispielsweise die Gestalt eines Stabes, insbesondere in Form und Grösse eines üblichen Schreibstiftes, eines Quaders oder einer Kugel.

In diesem Sinne kann ein nichtstationärer Datenspeicher also beispieisweise eine Scheck-. Ausweis- oder Berechtigungskarte anderer Art mit klarlesbaren und/oder verborgenen Daten, ein Sparbuch mit aufgedruckten Daten oder ein schlüsselartiges Gebilde, das als Datenträger dient, sein.

Zum Gelesenwerden wird der nichtstationäre Datenspeicher von aussen her, in der Regel durch eine dafür vogesehene und in ihrer Querschnittkontur dem Querschnittprofil des nichtstationären Datenspeichers zweckentsprechend komplementäre Öffnung, in das Lesegerät eingeführt. Dabei und/oder dadurch wird der nichtstationäre Datenspeicher in den Erfassungsbereich eines zum jeweiligen nichtstationären Datenspeicher kompatiblen "Lesekopfes" gebracht, der Daten aus dem angebotenen nichtstationären Datenspeicher lesen kann.

Entsprechend den vorstehenden Ausführungen kann der Lesekopf also beispielsweise ein Bildwandler, ein optischer, mechanischer, magnetischer, kapazitiver oder elektrischer Abtaster oder einfach eine galvanische Stecker- oder Kontaktleiste sein.

Die aus dem nichtstationären Datenspeicher gelesenen Daten können noch im Lesegerät selbst umgesetzt, gewandelt, aufbereitet und/oder verarbeitet werden und entweder dann anschliessend oder unmittelbar in der ausgelesenen Form über eine zweckentsprechende Übertragungsstrecke zu einem Auswerter, beispielsweise und vorzugsweise einem Computer, übertragen werden.

Lesegeräte im Sinne der Erfindung können also beispielsweise und vorzugsweise Scheckkarten- und/oder Sparbuchleser in Bargeldausgabegeräten, Belegkartenleser in Abrechnungsautomaten, Ausweiskartenleser in Zugangssicherungsanlagen oder mechanische Abtaster in Steuerungs-, insbesondere Schliessanlagen, sein.

Lesegeräte im engeren Sinne der Erfindung sind demnach speziell solche Lesegeräte der vorstehend definierten Art, die zumindest weitgehend unbeschränkt öffentlich zugänglich und als Dateneingabegeräte für zumindest in der Regel unbeaufsichtigte Automaten eingesetzt sind, also Scheckkartenleser, Sparbuchleser oder Ausweiskartenleser.

Solche Lesegeräte sind in der Regel die einzige Schnittstelle zwischen dem Benutzer und dem Auswertergerät.

Werden nun der Leser und/oder die Übertragungsstrecke mechanisch, elektrisch, optisch oder in anderer Weise mutwillig oder durch einen aus anderem Grund auftretenden Defekt ausser Betrieb gesetzt, so wird der Auswerter in aller Regel davon ausgehen, dass aer Leser unoenutzt ist. Durch diesen systematischen Interpretationsfehler können dem Betreiber einer mit einem solchen Lesegerät ausgerüsteten Anlage je nach Anwendungsbereich durchaus beachtliche, gar nicht wiedergutzumachende Ausfallschäden entstehen.

Aus der US-A-3 906 448 ist ein beweglich in einem Kartenleser montiertes Testelement zur Überwachung eines physikalischen Defektes dieses Kartenlesers bekannt, das bei Einführung einer zu lesenden Karte in den Kartenleser aus seiner Ruhestellung geschoben oder geklappt wird und diese bei Entfernen der eingeführten Karte wieder einnimmt. Auch wenn ein mit diesem bekannten Testelement ausgestatteter Kartenleser mit ausreichender Zuverlässigkeit ermitteln kann, ob eine Fremdkarte eingeschoben ist oder nicht und insbesondere, ob sich irgendwelche in den Leseschlitz des Kartenlesers eingeführte Fremdkörper zwischen Testelement und Lesekopf befinden, lassen sich dennoch nicht alle mechanischen Störungszustände des Lesers ermitteln.

Hier will die Erfindung Abhilfe schaffen.

Der Erfindung liegt die Aufgabe zugrunde, ein Lesegerät der eingangs genannten Art zu schaffen, das jede Störung der Betriebsbereitschaft des Lesegerätes und/oder der übertragungsstrecke der Auswerteinheit zuverlässig und boykottsicher anzeigt.

Zur Lösung dieser Aufgabe weist ein Lesegerät der eingangs beschriebenen Art gemäss der Erfindung die im kennzeichnenden Teil des Patentanspruchs 1 genannten Merkmale auf.

Der Erfindung liegt weiterhin die Aufgabe zugrunde, ein Verfahren zu schaffen, das eine zuverlässige und boykottsichere Meldung eines Ausfalls der Betriebsbereitschaft automatisch arbeitender erfindungsgemäßer Belegleser oder Leser von nichtstationären Datenspeichern gewährleistet, wobei ein Ausfall der Datenübertragungsstrecke zwischen dem Lesegerät und einer Auswerteinheit miterfasst werden soll.

Diese Aufgabe wird durch ein Verfahren gelöst, das die im Patentanspruch 7 genannten Merkmale aufweist.

Ausgestaltungen der Erfindung sind Gegenstand der Unteransprüche.

Der wesentliche Grundgedanke der Erfindung beruht also dararuf speziell defektgefährdete und boykottgefährdete, insbesondere also weitgehend unbeschränkt öffentlich zugängliche Dateneingabegeräte dadurch fortlaufend unter Istzeitbedingungen zuverlässig und vor allem boykottsicher einschliesslich ihrer Datenübertragungsstrecke bis zum Auswerter auf fehlerfreie und ausfallfreie Betriebssicherheit zu überwachen, dass das Eingabegerät, hier der Leser, bei Nichtbenutzung nicht in einem Standby-Zustand stillgesetzt wird, sondern in dieser Zwischenzeit ständig entweder kontinuierlich oder in vorgegebenen Intervallen intermittierend zum Lesen und Übertragen von Testdaten aus einem ortsfesten Testdatenspeicher veranlasst wird, wobei der Testdatenspeicher identisch lesbar wie die bestimmungsgemäss zu lesenden nichtstationären Datenspeicher ist und vom selben Lesekopf in identischer Weise wie diese gelesen wird; die gelesenen Testdaten werden dann in identischer Weise wie die Betriebsdaten zum Auswerter übertragen, wodurch gleichzeitig auch noch eine Überwachnung der Betriebsfähigkeit der Übertragungsstrecke gewährleistet ist, und zwar unabhängig davon, ob diese Ubertragungsstrecke nun innerhalb des Eingabe- oder Lesegerätes verläuft oder eine Datenfernübertragungsstrecke ist.

Die Erfindung ist im folgenden anhand von Ausführungsbeispielen in Verbindung mit den Zeichnungen näher beschrieben. Es zeigen:
- FIG. 1: einen Scheckkartenleser in perspektivischer Sicht von unten; und
- FIG. 2: ein Lesegerät für Ausweiskarten, die mit einem integrierten Speicherchip bestückt sind.

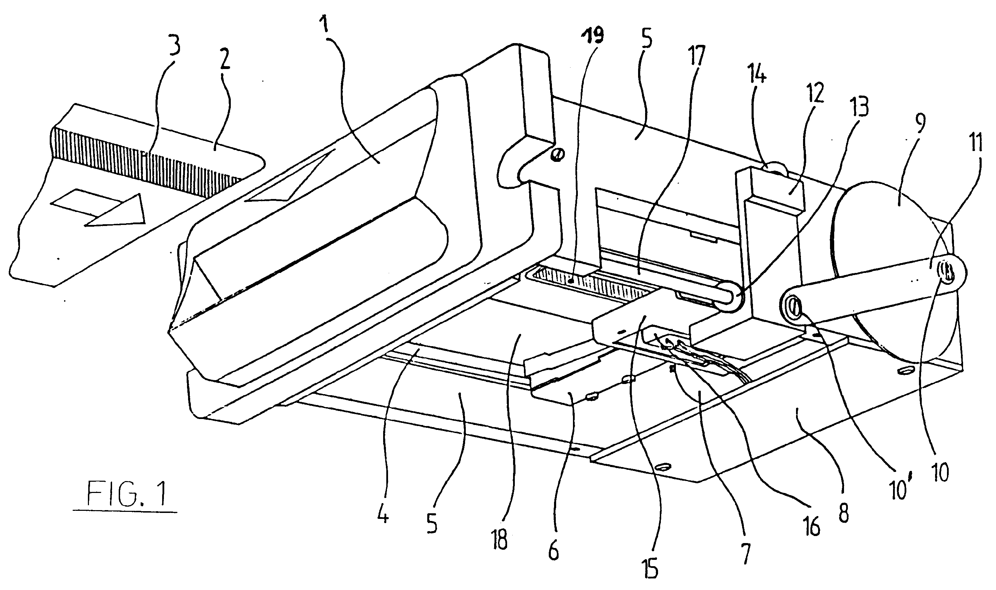

Die Fig. 1 zeigt in schematischer Darstellung und in perspektivischer Sicht von schräg unten ein Gerät zum Lesen von Scheckkarten 2, die mit einer Magnetaufzeichnungsspur 3 ausgerüstet sind. Die Karte wird mit der Aufzeichnungsspur 3 nach unten durch eine Einschuböffnung 1 in einer von aussen zugänglichen Frontplatte in das Lesegerät eingeschoben. Im Inneren des Gerätegehäuses ist die Karte 2 auf und zwischen Führungsschienen 4 an Gehäusewänden 5 so geführt, dass sie beim Einschieben in den Vorlageerfassungsbereich eines Magnetlesekopfes 16 gelangt, der auf einem Lesekopfträger 15 gehaltert ist.

Der Einschubweg für die zu lesende Karte ist durch einen Mikroschalter 6 begrenzt, der einerseits als Anschlag dient und andereseits gleichzeitig beim Anschlagen der eingeschobenen Karte einen Motor 7 einschaltet, der unter Steuerung durch eine Steuereinheit 8 ein Antriebsrad 9 um eine Umdrehung von 360° dreht. Ein an einem Kurbelzapfen 10 auf dem Antriebsrad 9 angelenkter Pleuel 11 schiebt dadurch einen Winkelschlitten 12 translatorisch einmal hin und her, der über eine Gleitlagerbuchse 13 auf einer Schiene 17 geführt ist. An seiner Unterseite trägt der Winkelschlitten den Lesekopfträger 15. Dabei ist der Winkelschlitten 12 zusätzlich an einer zweiten Lagerstelle gelagert, die als Andruck-Wälzlager 14 ausgebildet ist, das sich an der Aussenseitenwand 5 des Gerätegehäuses abstützt.

Bei dieser Anordnung sind die Lage des Lesekopfes 16 und der von diesem bei der Verschiebung zurückgelegte Weg so aufeinander abgestimmt, dass die Magnetaufzeichnungsspur 3 einer eingeschobenen Karte 2 gerade bestimmungsgemäss gelesen werden kann.

Bei dem in Fig. 1 dargestellten Ruhezustand des Lesegerätes, in dem keine Karte als zu lesender nichtstationärer Datenspeicher in den Leseschacht 1,4 des Gerätes eingeführt ist, liegt im Lesebereich des Magnetlesekopfes 16 eine Magnetaufzeichnungsspur, die als stationärer Testdatenspeicher 19 dient.

Solange in der in Fig. 1 dargestellten Weise keine Scheckkarte in das Lesegerät eingeschoben ist, bleibt auch der Mikroschalter 6 geöffnet. Bei geöffnetem Mikroschalter 6 wird die Steuereinheit 8 für den Antrieb des Lesekopfes 6 durch eine Zeitschaltuhr gesteuert. Diese in den Figuren nicht dargestellte Zeitschaltuhr kann sowohl ein externer mechanischer oder elektromechanischer oder elektronischer Impulsgeber als auch integrierter Bestandteil der Steuereinheit 8 selbst sein. Ebenso kann die Steuereinheit 8 als rein mechanisches, als elektromechanisches oder als elektronisches Steuerwerk ausgelegt sein. Für die Erfindung wesentlich ist dabei wiederum nicht die Realisierung der Funktion im einzelnen, sondern die Schaltung der Geräteteile zueinander in der Weise, daß bei geöffnetem Mikroschalter 6 die Steuereinheit 8 durch eine Zeitschaltuhr gesteuert wird, die je nach Anwendung und Bedarf vom Benutzer so einstellbar ist, daß sie an die Steuereinheit 8 und über diese an den Motor 7 Einschaltimpulse abgibt. Dadurch wird der Lesekopf 16 in gleicher Weise wie über die Magnetaufzeichnungsspur 3 einer eingeschobenen Karte 2 nun bei nicht eingeschobener Karte über die Magnetaufzeichnungsspur 19, die als stationärer Testdatenspeicher dient, geführt. Diese Testdaten werden vom Lesekopf 16 ausgelesen und entweder noch vom Lesegerät selbst verarbeitet oder über eine in den Figuren nicht dargestellte Übertragungsstrecke auf eine externe Auswerteinheit übertragen.

Solange die Auswerteinheit die vom Lesegerät vom stationären Testdatenspeicher gelesenen Testdaten zum erwarteten Zeitpunkt korrekt erhält, ist gewährleistet, daß das in der Fig. 1 gezeigte Scheckkartenlesegerät einwandfrei arbeitet, die vom Lesekopf 16 gelesenene Daten einwandfrei auf die Auswerteinheit übertragen werden und daß auch eine vom externen Benutzer eingeschobene Scheckkarte fehlerfrei gelesen werden kann.

Bei einem partiellen oder totalen Ausfall des Scheckkartenlesers oder der Übertragungsstrecke zwischen dem Lesekopf 16 und der Auswerteinheit gelangen die bei bestimmungsgemäßer Funktion vom Testdatenspeicher 19 zu lesenden Daten nicht mehr oder nicht mehr vollständig identisch mit dem erwarteten Dateninhalt zur Auswerteinheit, die aufgrund dieser Tatsache die Fehlfunktion des Scheckkartenlesers feststellen kann. Dabei kann durch die Auswerteinheit beispielsweise ein Alarmsignal oder Defektsignal gesetzt werden, das den Betreiber der Anlage auf die Notwendigkeit der Wiederherstellung der Betriebsbereitschaft des ausgefallenen Lesegerätes hinweist.

Dabei ist in ohne weiteres dem Fachmann erkennbaren Weise durchaus auch eine qualitative Fehlerdiskriminierung möglich. Wird beispielsweise eine Scheckkarte nicht vollständig in den Leseschacht eingeführt, so daß der Mikroschalter 6 nicht geschlossen wird, so wird der Lesekopf 16 nicht unter Steuerung durch die Scheckkarte, sondern unter Steuerung durch die Zeitschaltuhr des Gerätes geführt. Dies bewirkt, daß weder die Information auf der Magnetspur 3 der Scheckkarte 3, noch die Testdaten auf dem stationären Testdatenspeicher 19 vollständig einwandfrei gelesen und der Auswerteinheit zur Verfügung gestellt werden. Daran aber, daß sowohl die Scheckkartendaten als auch die Test daten in dem Umfang, in dem sie gelesen werden, als einwandfrei gelesen erkannt werden können, ist der Auswerteinheit ohne weiteres der Grund der festgestellten Fehlfunktion erkennbar, nämlich die nicht bis zum Anschlag eingeschobene Scheckkarte. Die Auswerteinheit ist dann problemlos so programmierbar, daß sie bei Erkennung dieses Fehlers erst dann das Defektsignal setzen wird, wenn diese Funktionsstörung länger als eine vorgegebene Zeit von beispielsweise 10 oder 15 min bestehenbleibt.

Bei dem in Fig. 1 gezeigten Ausführungsbeispiel eines Scheckkartenlesers liegen die Scheckkarte 2, die hier als nicht stationärer Datenträger dient, und der Testdatenspeicher 19 während des Lesevorganges statisch fixiert, während der Lesekopf 16 über die Magnetspuren 3,19 bewegt wird. Ohne weiteres ist dem Fachmann ersichtlich, daß diese Verhältnisse auch umgekehrt werden können, und zwar in der Weise, daß die Scheckkarte 2 über einen geeigneten Antrieb, beispielsweise einen Reibradantrieb, automatisch in den Schacht eingezogen und wieder ausgeworfen wird und bei diesem Vorgang über den ortsfesten Lesekopf 16 geführt wird. Bei dieser Ausführung des Gerätes ist auch der Testdatenspeicher 19 beweglich, d.h. auf einem beweglichen Träger so angeordnet, daß er in gleicher Weise wie eine eingeschobene Scheckkarte durch denselben Reibradantrieb, der die Scheckkarte in das Gehäuse einzieht, über den ortsfesten Lesekopf 16 geführt wird. Der Austausch des nicht-stationären Datenspeichers, d.h. der Scheckkarte, gegen den stationären Testdatenspeicher und umgekehrt kann dabei in prinzipiell beliebiger Weise erfolgen, beispielsweise so, daß beim Einführen der Stirnkante der Scheckkarte 2 der Testdatenträger gegen eine Rückführfeder über einen entsprechend in der Einführbahn der Scheckkarte beweglich angeordneten Anschlag zurückgeschoben wird. Wesentlich ist dabei lediglich, daß wiederum dem Lesekopf stets und solange der Testdatenspeicher als Vorlage zum Lesen vorgelegt wird, wie kein nicht-stationärer externer Datenspeicher, hier also keine Scheckkarte, in den Einführungsschacht des Lesegerätes eingeführt ist, und daß beim Einführen einer solchen Karte der Lesekopf zwangsläufig bestimmungsgemäß und vollständig die Scheckkarte statt des Testdatenspeichers liest.

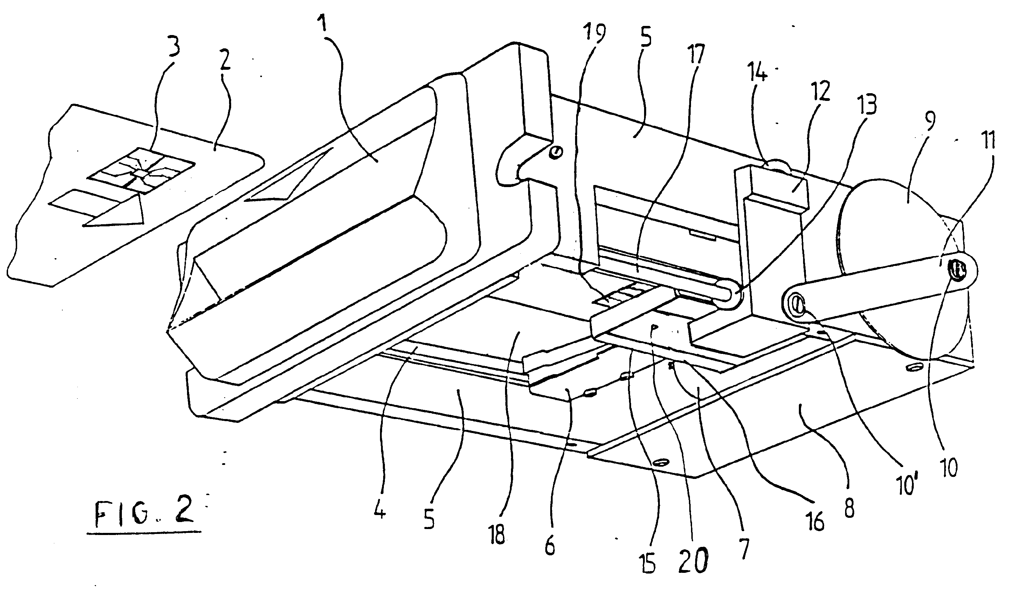

Ein weiteres Ausführungsbeispiel der Erfindung ist in der Fig. 2, ebenfalls in Perspektivischer schematischer Darstellung in der Sicht von schräg unten dargestellt. Bei dem in Fig. 2 gezeigten Lesegerät handelt es sich um ein Lesegerät für Ausweiskarten 2, die einen integrierten Halbleiterspeicher 3 als nicht stationären Datenspeicher mit einer vergleichsweise großen Datenmenge enthalten. Ein identisch ausgebildeter Speicherchip dient als Testdatenspeicher 19, der statisch und ortsfest im Lesegerät über dem Lesekopf 16 gehaltert ist.

Der Lesekopf 16 ist als eine Gruppe federnder Kontaktstücke ausgebildet, die komplementär zu den Anschlußkontaktflächen der Datenspeicherchips 3,19 angeordnet sind. Der so ausgebildete Lesekopf 16 ist auf einer Lesekopfhalterung 15 montiert, die um eine quer zu den Führungen 4 liegenden Achse verschwenkbar ist. Auf ihrer Unterseite trägt die schwenkbare Lesekopfhalterung 15 eine Gleitlagerfläche 20, die auf dem Winkelschieber 12 aufliegt. Dabei ist der Winkelschieber 12 im übrigen von gleicher Art und in gleicher Weise antreibbar wie bei dem in Fig. 1 beschriebenen Ausführungsbeispiel erläutert. Dabei sind in den Figuren 1 und 2 gleiche Teile mit gleichen Bezugszeichen gekennzeichnet.

Die Gleitlagerfläche 20 des Lesekopfträgers 15 und die mit dieser zusammenwirkende Gleitlagerfläche auf der Innenseite des Winkelschiebers 12 sind derart keilförmig zur Führungsstange 17 des Winkelschiebers 12 ausgerichtet, daß beim motorischen Verschieben des Winkelschiebers 12 in Richtung auf die Einschuböffnung 1 des Lesegerätes zu der schwenkbare Lesekopfträger 15 und damit der auf diesem fest gehalterte Kontaktfederlesekopf 16 in der Darstellung der Fig. 2 nach oben, also in Andruck auf die Kontaktflächen des jeweils angebotenen Datenspeichers 3 oder Testdatenspeichers 19 gebracht wird. Da einerseits das Auslesen der Daten aus dem Speicherchip außerordentlich rasch erfolgt und andererseits der maximale Andruck der Kontakte praktisch im Totpunkt des Kurbeltriebs 9, 10,11 erfolgt, braucht in der Regel für diesen Lesevorgang nicht einmal die Rotation des Antriebsrades 9 unterbrochen zu werden.

Im übrigen entspricht auch der in Fig. 2 dargestellte Ausweiskartenleser in seiner Funktion dem in der Fig.1 gezeigten und im Zusammenhang mit dieser ausführlich erläuterten Funktionsweise, so daß auf die vorstehenden Ausführungen verwiesen werden kann.

Dem Fachmann ist im Zusammenhang mit der Fig. 2 beispielsweise ohne weiteres erkennbar, daß der Testdatenspeicher 19 nicht unbedingt auch denselben physikalischen Aufbau wie der externe nicht-stationäre Datenspeicher 3 zu haben braucht. Entscheidend ist lediglich, daß er diesen zumindest so nachbildet, daß der Lesekopf 16 bei nicht eingeschobener Ausweiskarte 2 die gleiche Verteilung und Anordnung der Kontaktflächen am Testspeicher vorfindet wie bei eingeschobener Ausweiskarte. Das eigentliche Testspeichermedium kann bei dieser Ausgestaltung dann beispielsweise auch ein Mikrocomputer sein, der an anderer Stelle des Gerätes physikalisch angeordnet ist und von dort die vom Lesekopf 16 an den Testdatenspeicher-Kontaktflächen zu lesenden Testdaten über entsprechende Leiterbahnen zur Verfügung stellt.

Entsprechendes gilt auch beispielsweise für den in Fig. 1 gezeigten Scheckkartenleser. Auch hier wäre denkbar, daß der Testdatenspeicher 19 in seiner physikalischen Ausgestaltung nicht unbedingt aus der gleichen magnetisierbaren Beschichtungsmasse zu bestehen braucht, aus der die Magnetspur 3 auf der Scheckkarte 2 (Fig. 1) hergestellt ist. Denkbar wäre beispielsweise, daß statt dessen der Testdatenspeicher 19 als eine vorgegebene Folge elektromagnetisch erzeugter magnetischer Mikrofelder ausgebildet ist, die vom Magnetlesekopf 16 in gleicher Weise lesbar sind wie von der Magnetaufzeichnungsspur 3 gelesene Daten. Entscheidend ist primär die identische Lesbarkeit, nicht die identische physikalische Ausbildung des Testdatenspeichers.

## Patentansprüche

1. Gerät zum automatischen Lesen von Daten aus einem externen nichtstationären Datenspeicher (2,3), wobei das Gerät einen Lesekopf (16), in dessen im Geräteinneren liegenden Erfassungsbereich hinein der nichtstationäre Datenspeicher zum Lesen seines Inhalts definiert geführt (4) von aussen her einführbar ist, und einen im Geräteinneren angeordneten stationären Testdatenspeicher (19) enthält, der von gleicher oder nachgebildeter Art wie der nichtstationäre Datenspeicher (2,3) ist und stets dann im Erfassungsbereich des Lesekopfes (16) für diesen zum Lesen von Testdaten verfügbar ist, wenn kein nichtstationärer Datenspeicher in diesen Erfassungsbereich eingebracht ist,
dadurch **gekennzeichnet**,
daß der Testdatenspeicher (19) ortsfest und die Führung (4) für den nichtstationären Datenspeicher (2,3) so zwischen dem Testdatenspeicher und dem Lesekopf angeordnet ist, dass der eingeführte nichtstationäre Datenspeicher den Testdatenspeicher verdeckt und für den Lesekopf unzugänglich werden läßt.

2. Lesegerät nach Anspruch 1,
dadurch **gekennzeichnet**,
daß der der Lesekopf zum Datenlesen relativ zum nichtstationären Datenspeicher und zum Testdatenspeicher verschiebbar ist, das Speichermedium der Datenspeicher (2,3;19) eine magnetisierbare Schicht ist und der Lesekopf ein alternativ sowohl auf mindestens eine Aufzeichnungsspur des nichtstationären Datenspeichers als auch auf mindestens eine Aufzeichnungsspur des Testdatenspeichers zum Datenlesen aufsetzbarer Magnetlesekopf ist.

3. Lesegerät nach Anspruch 1,
dadurch **gekennzeichnet**,
daß der nichtstationäre Datenspeicher, der Testdatenspeicher und der Lesekopf zum Datenlesen statisch gehalten sind, das Speichermedium der Datenspeicher (2,3;19) ein auf einer Trägerkarte (2) integrierter Halbleiterchip (3) ist und der Lesekopf (16a) eine auf freiliegende Kontaktflächen der Chips (3;19) insbesondere federnd andrückbare Kontaktplatte ist.

4. Lesegerät nach Anspruch 1,
dadurch **gekennzeichnet**,
daß der der Lesekopf zum Datenlesen relativ zum nichtstationären Datenspeicher und zum Testdatenspeicher verschiebbar ist, das Speichermedium der Datenspeicher (2,3;19) eine optisch im sichtbaren oder unsichtbaren Spektralbereich lesbare Oberflächenveränderung des Datenspeicherträgers und der Lesekopf ein optischer Abtaster ist.

5. Lesegerät nach Anspruch 1,
dadurch **gekennzeichnet**,
daß der Lesekopf zum Datenlesen stationär zum nichtstationären Datenspeicher und zum Testdatenspeicher angeordnet ist, das Speichermedium der Datenspeicher (2,3;19) eine optisch im sichtbaren oder unsichtbaren Spektralbereich lesbare Oberflächenveränderung des Datenspeicherträgers und der Lesekopf ein optischer Ganzbildwandler ist.

6. Lesegerät nach Anspruch 4 oder 5,
dadurch **gekennzeichnet**,
daß der nichtstationäre Datenspeicher ein Sparbuch ist, das Speichermedium ein Aufdruck oder eine handschriftliche Eintragung ist und daß der Lesekopf ein üblicher OCR-Lesekopf ist.

7. Verfahren zur boykottsicheren Geräte- und Übertragungsstrecken-Defektüberwachnung automatisch von vorgelegten externen nichtstationären Datenspeichern lesender Dateneingabegeräte nach Anspruch 1,
dadurch **gekennzeichnet**,
daß bei nicht vorgelegtem externem nichtstationärem Datenspeicher mit frei wählbar vorgegebener Frquenz ständig oder intermittierend ein geräteinterner ortsfester Testdatenspeicher nach dem gleichen Verfahren gelesen wird, mit dem vom selben Lesekopf auch der nichtstationäre Datenspeicher gelesen wird, daß die gelesenen Testdaten über die übertragungsstrecke zu einer Auswerteinheit übertragen und von dieser auf Richtigkeit geprüft werden und daß bei fehlerhaften oder fehlenden Testdaten ein Defektsignal gesetzt wird.

8. Verwendung des Lesegerätes nach einem der Ansprüche 1 bis 6 oder des Verfahrens nach Anspruch 7 zur boykottsicheren Anzeige von Defekten in automatischen Bargeldausgabegeräten oder Zutrittsberechtigungsanlagen.

## Claims

1. A device for reading data automatically from an external non-stationary data storage means (2,3), the device comprising a reading head (16), into whose reading area in the inside of the device the non-stationary data storage means is insertable from outside to read its data in a definitely guided manner and a stationary storage means (19) for test data in the inside of the device, which is of the same or imitated kind like the non-stationary data storage means and which is in the reading area of the reading head (16) and present for the same to read test data always at the time, when no non-stationary data storage means is present in the reading area,
**characterized in**
that the test data storage means (19) is localized stationary and the guiding (4) for the non-stationary data storage means (2,3) is provided between the test data storage means and the reading head such that the inserted non-stationary data storage means covers the test data storage means and renders it inaccessible for the reading head.

2. A reading device according to claim 1,
**characterized in**
that for reading data the reading head is displaceable relatively in regard of the non-stationary data storage means and the test data storage means, the storage means of the data storage means (2,3;19) being a magnetizable coating and the reading head being a magnetic reading head and detachable alternatively onto at least one storage track of the non-stationary data storage means as well as onto at least one storage track of the test data storage means for reading data.

3. A reading device according to claim 1,
**characterized in**
that the non-stationary data storage means, the test data storage means and the reading head are being kept statically for reading data, the storage medium of the data storage means (2,3;19) being a semi-conductor chip (3) integrated on a support card (2) and the reading head (16a) being a contact plate which is in particular springably depressable onto non-covered contact surfaces of the chips (3;19).

4. A reading device according to claim 1,
**characterized in**
that for reading data the reading head is displaceable relatively to the non-stationary data storage means and the test data storage means, the storage medium of the data storage means (2,3;19) being a variation of the surface of the support means of the data storage means being optically readable in the visible or the invisible spectural range and the reading head being an optical detector.

5. A reading device according to claim 1,
**characterized in**
that for reading data the reading head is localized sationary to the non-stationary data storage means and the test data storage means, the storage medium of the data storage means (2,3;19) being a variation of the surface of the supporting means of the data storage means optically readable in the visible or in the invisible spectural range and the reading head being an optical image sensor.

6. A reading device according to claim 4 or 5,
**characterized in**
that the non-stationary data storage means being a savings bank deposit book, the storage medium being an imprint or a handwritten entry and that the reading head being an ordinary OCR-reading head.

7. A method for supervizing automatically in a boykott safe manner the defects of devices reading data from inserted non-stationary data storage means and of data transmission lines of said devices according to claim 1,
**characterized in**
that when no external non-stationary data storage means is inserted, a test data storage means stationary localized inside the device is read permanently or intermittently with a free choosable frequency using the same method by which also the non-stationary data storage means is read by the same reading head, that the read test data are transmitted by the transmission line to a processing unit testing the correctness of said data and that a defect signal is set, if the test data are incorrect or missing.

8. The use of the reading device according to one of the claims 1 to 6 or of the method according to claim 7 for indicating in a boykott safe manner in automatic teller machines or devices testing the authorization of admittance.

## Revendications

1. Appareil pour lire automatiquement des données dans une mémoire externe non fixe (2, 3), l'appareil contenant une tête de lecture (16) dans la zone d'enregistrement de laquelle, zone située à l'intérieur de l'appareil, la mémoire non fixe peut être introduite de l'extérieur en étant guidée de façon définie (4) pour la lecture de son contenu, ainsi qu'une mémoire d'essai (19) fixe, disposée à l'intérieur de l'appareil, qui est de type similaire à la mémoire non fixe (2, 3) ou correspond à une imitation et qui, dans la zone d'enregistrement de la tête de lecture (16), est constamment disponible pour celle-ci pour la lecture de données d'essai si aucune mémoire non fixe n'est installée dans cette zone d'enregistrement, caractérisé en ce que la mémoire d'essai (19) est disposée de façon stationnaire et la commande (4) de la mémoire non fixe (2, 3) est disposée de telle sorte entre la mémoire d'essai et la tête de lecture que la mémoire non fixe introduite recouvre la mémoire d'essai et rend la tête de lecture inaccessible.

2. Lecteur selon la revendication 1, caractérisé en ce que la tête de lecture des données est mobile relativement à la mémoire non fixe et à la mémoire d'essai, en ce que le support des mémoires (2, 3, 19) est une couche magnétisable et en ce que la tête de lecture est une tête de lecture magnétique installable, pour la lecture des données, alternativement aussi bien sur au moins une piste d'enregistrement de la mémoire non fixe qu'également sur au moins une piste d'enregistrement de la mémoire d'essai.

3. Lecteur selon la revendication 1, caractérisé en ce que la mémoire non fixe, la mémoire d'essai et la tête de lecture des données sont maintenues de façon statique, en ce que le support des mémoires (2, 3, 19) est une puce à semiconducteur (3) intégrée sur une carte porteuse (2) et en ce que la tête de lecture (16a) est une plaque de contact que l'on peut presser, en particulier de façon élastique, sur des surfaces de contact libres des puces (3, 19).

4. Lecteur selon la revendication 1, caractérisé en ce que la tête de lecture des données est mobile relativement à la mémoire non fixe et à la mémoire d'essai, en ce que le support des mémoires (2, 3, 19) est une modification superficielle du support des mémoires, lisible optiquement dans la région spectrale visible ou invisible et en ce que la tête de lecture est un analyseur optique.

5. Lecteur selon la revendication 1, caractérisé en ce que la tête de lecture des données est disposée de façon fixe par rapport à la mémoire non fixe et à la mémoire d'essai, en ce que le support des mémoires (2, 3, 19) est une modification superficielle du support des mémoires, lisible optiquement dans la région spectrale visible ou invisible et en ce que la tête de lecture est un convertisseur optique d'image entière.

6. Lecteur selon les revendications 4 ou 5, caractérisé en ce que la mémoire non fixe est un livret d'épargne, en ce que le support de mémoire est une impression en surcharge ou une inscription manuscrite et en ce que la tête de lecture est une tête de lecture OCR usuelle.

7. Procédé de surveillance des défauts de l'unité et des parcours de transmission, surveillance protégée contre le piratage, mis automatiquement en oeuvre à partir de mémoires externes non fixes, installées devant des unités d'introduction et de lecture de données, selon la revendication 1, caractérisé en ce que, pour une mémoire externe non fixe et non installée devant, avec une fréquence donnée pouvant être librement choisie, une mémoire d'essai stationnaire interne à l'unité est lue constamment ou de façon intermittente selon le même procédé que celui avec lequel est également lue par la même tête de lecture la mémoire non fixe, en ce que les données d'essai lues sont transmises par l'intermédiaire du parcours de transmission à une unité d'analyse puis leur exactitude est contrôlée par celle-ci et en ce que, pour des données d'essai inexactes ou manquantes, un signal de défaut se met en place.

8. Utilisation du lecteur selon l'une des revendications 1 à 6 ou du procédé selon la revendication 7 pour l'indication de défauts, protégée contre le piratage, dans des unités automatiques dispensatrices d'argent comptant ou des installations d'autorisation d'accès.
